# EUROPÄISCHE PATENTSCHRIFT

(11) **EP 2 746 698 B1**
(45) Veröffentlichungstag und Bekanntmachung des Hinweises auf die Patenterteilung: **22.08.2018**
(21) Anmeldenummer: 13005899.3
(22) Anmeldetag: 18.12.2013
(51) Int. Cl.: F24S 80/00, F24S 30/00

(54) **Dem Sonnenstand nachführbare Tragvorrichtung für ein Energiegewinnungsmodul**
Support device for an energy generation module that tracks the position of the sun
Support de module de collecte d'énergie capable de suivre le soleil

(30) Priorität: 20.12.2012 DE 102012025095
(43) Veröffentlichungstag der Anmeldung: 25.06.2014
(73) Patentinhaber: CST CumSolTec GmbH, 70597 Stuttgart (DE)
(72) Erfinder: Sundermann, Wolfgang, 71272 Renningen (DE)
(74) Vertreter: Kotitschke, Bernd

(56) Entgegenhaltungen:
- EP-A1- 0 384 839
- EP-A1- 1 788 322
- EP-A1- 2 327 941
- DE-A1-102006 049 690
- DE-A1-102007 050 977
- DE-A1-102009 057 408
- DE-U1- 9 406 294
- ES-A1- 2 107 960

## Beschreibung

Die Erfindung betrifft eine vorzugsweise dem Sonnenstand ein- oder zweiachsig nachführbare Tragvorrichtung für ein Energiegewinnungsmodul.

Dem Sonnenstand nachführbare Tragvorrichtungen für Energiegewinnungsmodule sind üblicherweise großen Winddruck- und Windsogkräften ausgesetzt, insbesondere, da die Energiegewinnungsmodule eine meist geneigte, relativ große und zudem geschlossene Fläche aufweisen, die dem Wind vor allem bei rückseitiger Anströmung einen großen Widerstand entgegensetzt. Deshalb umfassen diese Tragvorrichtungen üblicherweise statisch kräftig dimensionierte Stahl- oder Aluminiumträger, um die Winddruck- und Windsogkräfte aufnehmen und zur Lastabtragung weiterleiten zu können. Eine Tragvorrichtung des nächstkommenden Standes der Technik stellt das Dokument DE102006049690A dar.

Eine Aufgabe der Erfindung ist es, eine verbesserte und/oder alternative Tragvorrichtung für ein Energiegewinnungsmodul zu schaffen.

Diese Aufgabe kann mit den Merkmalen des Hauptanspruchs gelöst werden. Vorteilhafte Weiterbildungen sind den Unteransprüchen zu entnehmen.

Die Erfindung schafft eine Tragvorrichtung für ein Energiegewinnungsmodul, z.B. ein Photovoltaikmodul oder ein Solarkollektor. Die Tragvorrichtung ist insbesondere für leicht geneigte (z.B. ≤ 20°, 15° oder 10°) oder horizontale Aufstellflächen geeignet, zweckmäßig ohne dass eine statische Rückverankerung in der Aufstellfläche erforderlich ist. Die Tragvorrichtung ist zudem zum vorzugsweise aufstellflächennahen Halten des Energiegewinnungsmoduls ausgeführt.

Die Tragvorrichtung umfasst eine Tragkonstruktion mit einer dem Sonnenstand ein- oder zweiachsig nachführbaren Modultrageinrichtung zum Halten des Energiegewinnungsmoduls und ein Windschild, das zweckmäßig zur Windkraftreduzierung dient, insbesondere zur Windsog- und/oder Winddruckreduzierung. Das Windschild kann vorzugsweise zusätzlich als Witterungsschutz für darunter anordbare Teile der Tragkonstruktion dienen.

Die Tragvorrichtung zeichnet sich insbesondere dadurch aus, dass das Windschild zweckmäßig in Abhängigkeit der Bewegung der Modultrageinrichtung längen- und/oder höhenvariabel ausgeführt ist. So kann sich das Windschild z.B. in der Höhe reduzieren und somit verkürzen, wenn die Modultrageinrichtung eine leicht geneigte Stellung einnimmt, und in der Höhe vergrößern und somit verlängern, wenn die Modultrageinrichtung eine stark geneigte Stellung einnimmt. Ferner ist es möglich, dass das Windschild zusammen mit der Modultrageinrichtung um eine zweckmäßig vertikale Drehachse drehbar ist.

Es ist möglich, dass das Windschild mehrere Lamellen aufweist. Die Lamellen zeichnen sich insbesondere dadurch aus, dass sie sich gegenseitig überlappen, dass sie übereinanderschiebbar sind und/oder dass sie windlastabhängig nach hinten ausschwenkbar sind. Vorzugsweise sind die Lamellen oben schwenkbar gelagert, z.B. an der weiter unten beschriebenen rückseitigen Haltestruktur, und unten auf einer darunter liegenden Lamelle abstützbar. Die unterste Lamelle kann unten z.B. über zumindest einen eigenen Auflagerblock verfügen. Vorzugsweise ist zumindest eine Lamelle durch Windlastbeaufschlagung frei ausschwenkbar, zweckmäßig nach hinten und/oder zumindest abschnittsweise. Zumindest eine Lamelle ist vorzugsweise oben schwenkbar gelagert und unten z. B. auf einer anderen Lamelle frei abstützbar. Durch die zweckmäßig freie Verschwenkbarkeit zumindest einer Lamelle wird insbesondere ermöglicht, dass ggf. auftretende, insbesondere nach hinten gerichtete, Windsogkräfte deutlich reduziert werden können und/oder ein unter der Tragvorrichtung erzeugter Luftunterdruck aufgebaut werden kann, was vorteilhaft für eine zusätzliche aerodynamische Stabilisierung der Tragvorrichtung sorgen kann.

Das geschlossene Windschild hingegen kann die kippenden und abhebenden Windkräfte insbesondere bei einer rückseitigen Windanströmung erheblich reduzieren und trägt damit zu einer statischen Stabilisierung der Tragvorrichtung unter rückseitiger Windlast bei.

Die zumindest eine Lamelle oder allgemein das Windschild dient somit vorzugsweise zur Winddruckreduzierung (zweckmäßig Lamelle(n) geschlossen) und zur Windsogreduzierung (zweckmäßig Lamelle(n) öffnen sich, insbesondere schwenken nach hinten aus) .

Die Tragkonstruktion umfasst ferner eine Haltestruktur, die zweckmäßig ebenso in Abhängigkeit der Bewegung der Modultrageinrichtung längen- und/oder höhenvariabel ausgeführt ist und zum Halten des Windschilds dient.

Die Haltestruktur ist vorzugsweise teleskopartig oder scherenförmig längenvariabel ausgeführt.

Das Windschild ist zweckmäßig um eine stationäre horizontal ausgerichtete Gelenkverbindung gemeinsam mit der Haltestruktur schwenkbar und/oder um eine stationäre vertikal ausgerichtete Drehverbindung zusammen mit der Modultrageinrichtung drehbar.

Die Tragkonstruktion kann zudem ein Grundgerüst umfassen, das zum Tragen der Modultrageinrichtung und/oder der Haltestruktur dient. Das Grundgerüst kann z.B. kreuz-, rahmen- oder plattenförmig ausgeführt sein.

Die Tragkonstruktion umfasst somit die Modultrageinrichtung und zudem vorzugsweise die Haltestruktur und/oder das Grundgerüst.

Es ist möglich, dass die Modultrageinrichtung, die Haltestruktur und das Grundgerüst einen Dreigelenk-Mechanismus bilden. Dazu können die Modultrageinrichtung, die Haltestruktur und das Grundgerüst über zumindest drei vorzugsweise parallel zueinander ausgerichtete Gelenkverbindungen miteinander wirkverbunden sein. Z.B. kann die Haltestruktur oben über eine Gelenkverbindung mit der Modultrageinrichtung verbunden sein und unten über eine Gelenkverbindung mit dem Grundgerüst verbunden sein. Außerdem kann die Modultrageinrichtung unten über eine Gelenkverbindung mit dem Grundgerüst verbunden sein.

Es ist möglich, dass die Tragvorrichtung ein Ständerelement umfasst, das zum Aufstellen auf der Aufstellfläche und als Sockel für die Tragkonstruktion dient. Das Ständerelement dient insbesondere dazu, die Standfestigkeit der Tragvorrichtung zu gewährleisten. Zu diesem Zweck kann das Ständerelement selbst ausreichend Ballastgewicht aufweisen oder ausgeführt sein, Ballastgewicht aufzunehmen. Z.B. kann das Ständerelement einen oder mehrere vorzugsweise stapelbare Ballastblöcke aufweisen oder eine Tragwanne zur Aufnahme von Ballast umfassen.

Die Tragvorrichtung ist zweckmäßig so ausbalanciert, dass die Tragkonstruktion relativ zu dem Ständerelement um eine zweckmäßig horizontale Achse lastfallabhängig gezielt schwenk- oder kippbar ist und/oder quasi ganzheitlich, vorzugsweise vertikal gezielt absenkbar ist. Dadurch kann die Tragvorrichtung unterschiedlichen Lasten gezielt nachgeben, wodurch als Vorteil tragende Teile der Tragvorrichtung materialschonender dimensioniert werden können.

Insbesondere kann die Tragvorrichtung eine Stützeinrichtung aufweisen, die im Normalfall von der Aufstellfläche beabstandet ist und mittels einer lastfallabhängigen Schwenk- oder Kippbewegung (z.B. erzeugt durch Windlast) der Tragkonstruktion temporär auf der Aufstellfläche aufsetzbar ist und somit einen vergrößerten Hebelarm zur Lastabragung erzeugen kann. Alternativ oder ergänzend ist es möglich, dass die Stützeinrichtung mittels einer lastfallabhängigen Absenkbewegung (z.B. erzeugt durch Schneelast) der quasi ganzheitlichen Tragkonstruktion temporär auf der Aufstellfläche aufsetzbar ist. Die Schwenk-, Kipp- und/oder Absenkbewegung kann z.B. durch eine gezielte elastische Lagerung, durch eine gezielte elastische Nachgiebigkeit von Teilen der Tragkonstruktion, insbesondere des weiter unten beschriebenen Grundgerüsts, und/oder durch eine Drehlagerung gewährleistet werden. Die Stützeinrichtung kann z.B. Stützfüße umfassen oder z.B. durch einen unteren Randbereich der Modultrageinrichtung oder andere geeignete Stützelemente realisiert werden.

Die Tragvorrichtung kann somit ein auf unterschiedliche Lastzustände reagierendes passiv-adaptives Tragwerk darstellen.

Dadurch kann insbesondere die Tragkonstruktion deutlich materialschonender dimensioniert werden. Zudem steigt die Widerstandskraft der Tragkonstruktion gegenüber horizontalen und/oder kippgefährdeten Windkräften beträchtlich. Die vorübergehende kurzfristige Aussetzung der Sonnenstand-Nachführbarkeit, die mit dem temporären Aufsetzen der Stützeinrichtung auf der Aufstellfläche einhergeht, beeinträchtigt die Funktionstüchtigkeit der Tragvorrichtung nur unwesentlich. Eine Steuerung für einen Motor zum Antreiben der Tragvorrichtung kann bei einem vordefinierten Widerstand die Motortätigkeit für die Nachführbarkeit entsprechend vorübergehend aussetzen. Die passive Adaptivität kann alternativ oder ergänzend auch bei Schneelasten aktiviert werden. In diesem Fall ist die Sonnenstand-Nachführung ohnehin nicht erforderlich.

Es ist möglich, dass die Tragvorrichtung ein z.B. schwenkbares Firstprofil als Witterungsschutz umfasst, das zweckmäßig den Übergangsbereich zwischen der Modultrageinrichtung und dem Windschild überdeckt. Mittels des Firstprofils kann ein Eindringen von Regenwasser ins Innere der Tragvorrichtung verhindert werden. Ferner kann mittels der Ausschwenkbarkeit des Firstprofils bei Windströmung zum einen durch Anschlagen auf der Luvseite ein Eindringen von windgetriebenem Regenwasser ins Innere der Tragvorrichtung verhindert werden und zum anderen auf der Leeseite durch den aufgehenden Schlitz zwischen Firstprofil und Windschild bzw. Energiegewinnungsmodul durch Sogeffekte die Bildung eines Luftunterdrucks unter der Tragvorrichtung bewirkt werden.

Die Tragkonstruktion und das Windschild sind insbesondere so ausgebildet, dass nach Montage des Energiegewinnungsmoduls und des Windschilds selbige die Tragkonstruktion zumindest nahezu vollständig überdecken. Ein z.B. nicht überdeckter Firstbereich der Tragvorrichtung kann insbesondere durch das Firstprofil überdeckbar sein. Dadurch kann ein konstruktiver Witterungsschutz für zumindest nahezu die gesamte Tragkonstruktion geschaffen werden, die somit vor direkter Regen- und Sonneneinwirkung (z.B. vor aggressiver UV-Strahlung) geschützt werden kann. Dadurch wird z.B. ermöglicht, dass die Tragkonstruktion zumindest teilweise aus Holzträgern gefertigt werden kann. Optional kann das Holz z.B. mittels einem leichten umweltverträglichen Holzschutz, etwa einer Thermobehandlung, behandelt sein. Der konstruktive Witterungsschutz trägt dazu bei, dass die Funktionstüchtigkeit der aus Holz gefertigten Teile über die Funktionsdauer des Energiegewinnungsmoduls, die in der Regel ungefähr 20 Jahre beträgt, gewährleistet werden kann. Danach kann der Holzwerkstoff quasi rückstandsfrei entsorgt werden, z.B. durch Kompostieren oder Verbrennen, weil auf einen umweltunverträglichen, z.B. einen starken chemischen Holzschutz, verzichtet werden kann.

Insbesondere können die Modultrageinrichtung, die Haltestruktur und/oder das Grundgerüst Holzbalken (z.B. Holzleisten, etc.) umfassen. Zudem können die Lamellen als Holzlamellen ausgeführt sein, die vorzugsweise mit einem Witterungsschutz versehen sind, z.B. einer Beschichtung, einer Folie, chemischem Holzschutz, etc..

Die Modultrageinrichtung und/oder das Grundgerüst sind z.B. aus lösbar miteinander verbindbaren Holztragelementen ausgeführt, was z.B. einen Transport in kleiner und leichter Verpackung ermöglicht.

Es ist möglich, dass die Tragvorrichtung, insbesondere die Modultrageinrichtung, zum Halten eines einzigen Energiegewinnungsmoduls ausgeführt ist. Übliche Tragvorrichtungen dienen meist dazu, mehrere Energiegewinnungsmodule gleichzeitig zu tragen, um Ballastgewicht gegen Windsogkräfte auf eine größere Anzahl von Tragvorrichtungen verteilen zu können. Die Verteilung des Ballastgewichts durch die Vielzahl der Tragvorrichtungen kann allerdings zu Verwindungen innerhalb der Tragvorrichtungen führen, die möglicherweise zu einer statisch unzulässigen Belastung für die Energiegewinnungsmodule führen.

Zu erwähnen ist noch, dass die Modultrageinrichtung, die Haltestruktur und das Grundgerüst zusammen insgesamt ein Gewicht von vorzugsweise unter ungefähr 30 kg, 25 kg, 20 kg oder sogar 15 kg aufweisen.

Die Erfindung umfasst außerdem eine Anordnung mit zumindest einer Tragvorrichtung wie hierin beschrieben, wobei die Tragvorrichtung ein einziges Energiegewinnungsmodul trägt und das Energiegewinnungsmodul und das Windschild die Tragkonstruktion vollständig überdecken, mit Ausnahme des Firstbereichs der Tragvorrichtung, der vorzugsweise durch das Firstprofil überdeckt wird.

Die oben beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine Seitenansicht einer Tragvorrichtung gemäß einer Ausführungsform der Erfindung,
- Fig. 2: zeigt eine perspektivische Ansicht der Tragvorrichtung der Fig. 1 mit weggelassenem Energiegewinnungsmodul und weggelassenem Windschild,
- Fig. 3: zeigt eine andere perspektivische Ansicht der Tragvorrichtung der Figuren 1 und 2, wiederum mit weggelassenem Energiegewinnungsmodul und weggelassenem Windschild,
- Fig. 4: zeigt eine Seitenansicht der Tragvorrichtung der Figuren 1-3 in aufgerichteter Stellung,
- Fig. 5: zeigt eine Seitenansicht der Tragvorrichtung der Figuren 1-3 in schwach geneigter Stellung,
- Fig. 6a und 6b: zeigen eine Seitenansicht der Tragvorrichtung der Figuren 1-5 zur Illustrierung der auf unterschiedliche Lastzustände reagierenden passiven Adaptivität der Tragvorrichtung,
- Fig. 7: zeigt eine Seitenansicht eines Ständerelements für eine Tragvorrichtung gemäß einer Ausführungsform der Erfindung, und
- Fig. 8: zeigt eine Seitenansicht eines Ständerelements für eine Tragvorrichtung gemäß einer anderen Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

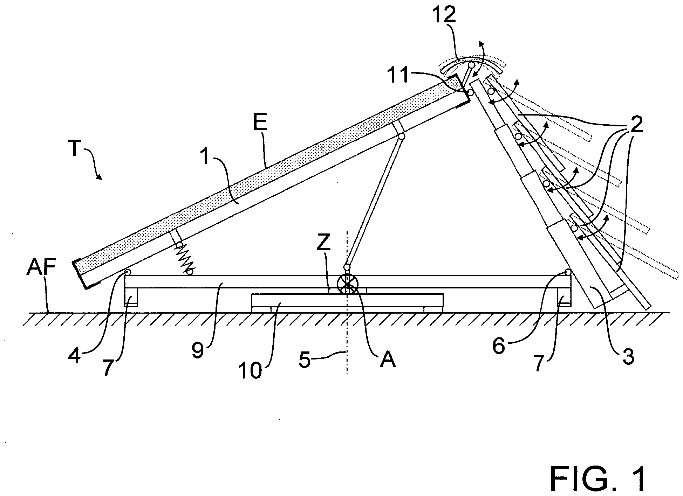

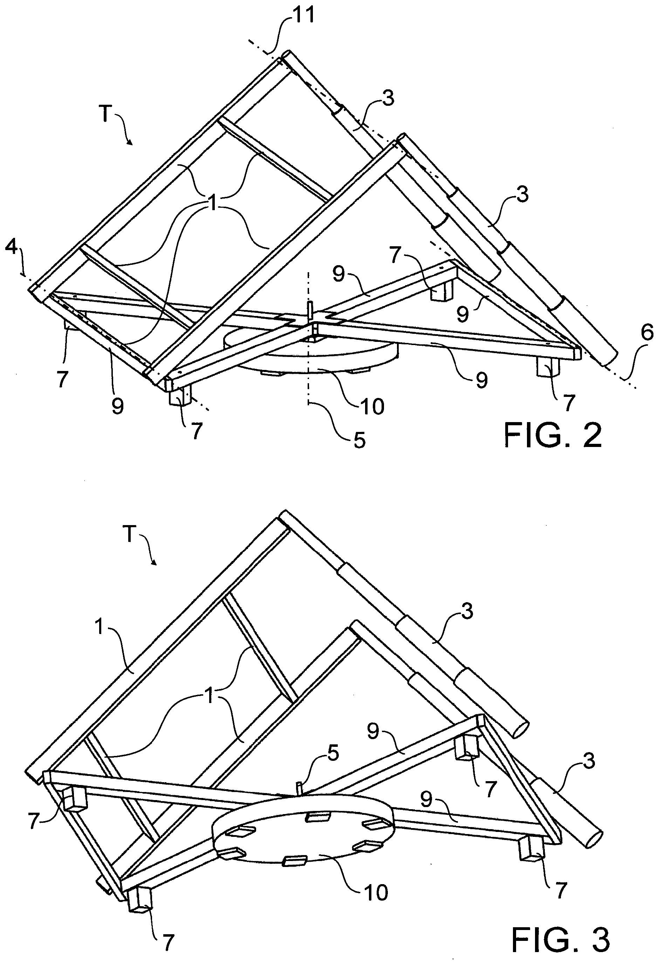

Figur 1 zeigt eine Seitenansicht einer zweiachsig dem Sonnenstand nachführbaren Tragvorrichtung T für ein Energiegewinnungsmodul E, vorzugsweise eines Photovoltaikmoduls oder eines Solarkollektors. Die Figuren 2 und 3 zeigen verschiedene perspektivische Ansichten der Tragvorrichtung T der Figur 1, allerdings insbesondere ohne Energiegewinnungsmodul E und ohne Windschild 2. Nachfolgend wird die Tragvorrichtung T unter Bezugnahme auf die Figuren 1 bis 3 beschrieben.

Die Tragvorrichtung T eignet sich insbesondere für ebene oder leicht geneigte Aufstellflächen AF, wie etwa Geländeflächen oder Flachdächer z.B. einer Garage, eines Carports oder einer Halle. Die Tragvorrichtung T ist zudem zur rückverankerungsfreien Nutzung auf der Aufstellfläche AF ausgeführt.

Die Tragvorrichtung T umfasst eine Tragkonstruktion, die durch eine dem Sonnenstand nachführbare Modultrageinrichtung 1 zum Halten des Energiegewinnungsmoduls E, eine Haltestruktur 3 zum Halten eines Windeschilds 2 und ein Grundgerüst 9 zum Tragen der Modultrageinrichtung 1 und der Haltestruktur 3 gebildet wird.

Die Montage des Energiegewinnungsmoduls E an der Modultrageinrichtung 1 geschieht durch die Anordnung von z.B. Haltewinkeln so, dass die vom Hersteller des Energiegewinnungsmoduls E vorgegebenen Bereiche für die Befestigung desselben genau eingehalten werden. Damit bleibt die statische Beanspruchung für den Rahmen des Energiegewinnungsmoduls E innerhalb des zulässigen Bereiches.

Die Tragvorrichtung T umfasst ferner ein Ständerelement 10, das zum Platzieren auf der Aufstellfläche AF und als Sockel für die Tragkonstruktion 1, 3, 9 dient. Das Ständerelement 10 ist ausreichend schwer oder kann nach Aufstellen am gewünschten Ort durch eine zusätzlich aufgebrachte Ballastierung gezielt beschwert werden, um die Standfestigkeit der Tragvorrichtung T zu gewährleisten. Das Ständerelement 10 kann z.B. gummiartige Aufstandselemente aufweisen. Das schwere Ständerelement 10 trägt dazu bei, dass die Tragvorrichtung T rückverankerungsfrei und somit ohne statische Rückverankerung in der Aufstellfläche AF verwendbar ist.

Die Modultrageinrichtung 1 ist unten über eine erste Gelenkverbindung 4 mit dem Grundgerüst 9 verbunden. Die Haltestruktur 3 ist unten über eine zweite Gelenkverbindung 6 mit dem Grundgerüst 9 verbunden. Die Modultrageinrichtung 1 und die Haltestruktur 3 sind oben über eine dritte Gelenkverbindung 11 miteinander verbunden. Die Modultrageinrichtung 1, die Haltestruktur 3 und das Grundgerüst 9 sind somit über einen Dreigelenk-Mechanismus 4, 6, 11 miteinander wirkverbunden. Die drei Gelenkverbindungen 4, 6 und 11 sind horizontal und parallel zueinander ausgerichtet.

Das Grundgerüst 9 ist über ein elastischen Zwischenlager Z und eine vertikal ausgerichtete Drehverbindung 5 (z.B. ein Zapfen) an das Ständerelement 10 gekoppelt.

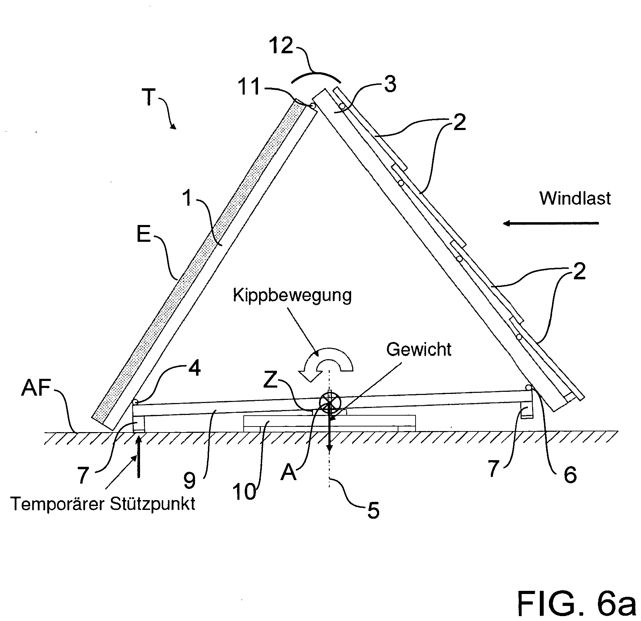

Das Zwischenlager Z erzeugt eine Achse A, um die die Tragkonstruktion 1, 3, 9 lastfallabhängig gezielt Schwenken oder Kippen kann, bis eine optionale, mehrere Stützfüße aufweisende Stützeinrichtung 7 auf der Aufstellfläche AF aufsetzt (vgl. Fig. 6a). Dabei setzen nicht alle Stützfüße 7 auf der Aufstellfläche AF auf, sondern nur der oder die nach unten verschwenkten.

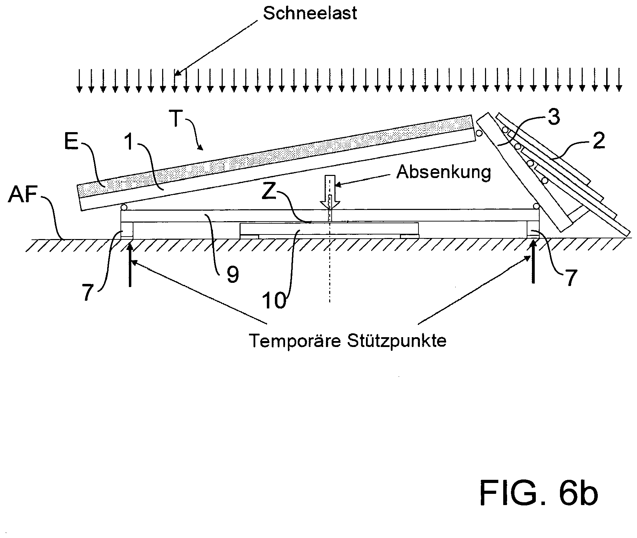

Ebenso ist eine Absenkung der Tragkonstruktion 1, 3, 9 als Ganzes denkbar, um z.B. starke vertikale Schneelasten gleichmäßig auf die Aufstellfläche AF abzutragen (vgl. Fig. 6b). Dabei setzen vorzugsweise alle Stützfüße 7 auf der Aufstellfläche AF auf.

Durch die zuvor beschriebene passive Adaptivität kann die Tragvorrichtung T auf unterschiedliche Lastzustände reagieren, was unter Bezugnahme auf die Figuren 6a und 6b weiter unten detaillierter beschrieben wird.

Die Drehverbindung 5 ermöglicht, dass die gesamte Tragkonstruktion 1, 3, 9 relativ zu dem Ständerelement 10 drehbar ist.

Die zweiachsige Sonnenstand-Nachführbarkeit wird durch die erste Gelenkverbindung 4 und die Drehverbindung 5 gewährleistet. Die Drehverbindung 5 ermöglicht eine beliebige Drehung um z.B. ± 120 ° und die Gelenkverbindung 4 ermöglicht eine beliebige Verschwenkung zwischen z.B. 0° und 60°. Allerdings ist zu erwähnen, dass insbesondere die Gelenkverbindungen 4 und 11 optional sind und die Erfindung somit auch nur einachsig um die Drehverbindung 5 dem Sonnenstand nachführbare Ausführungsformen umfasst. Die Nachführbarkeit erfolgt mittels einer motorischen Antriebseinheit und einer zugehörigen Steuereinheit.

Das Antreiben oder die Betätigung der Nachführung kann z.B. durch Elektromotoren, Hydraulikmotoren, Hydraulikzylinder, etc. erfolgen. Die Steuerung der Nachführung kann durch unterschiedliche, teils schon bekannte Mechanismen (z.B. durch Suche des hellsten Punktes am Himmel) erfolgen. Dabei werden die Energiegewinnungsmodule bei relativer Dunkelheit am Himmel, z.B. bei Nacht oder bei starker Bewölkung, in eine flach geneigte oder horizontale Stellung gefahren (die sogenannte "Hockstellung") .

Die Tragvorrichtung T umfasst zudem ein Windschild 2, das zur Windsog- bzw. Winddruckkraftreduzierung und als Witterungsschutz für einen Teil der darunter liegenden Haltestruktur 3 und einen Teil des darunter liegenden Grundgerüsts 9 dient.

Das Windschild 2 und die Haltestruktur 3 sind längen- und höhenvariabel und an die Bewegung und Stellung der Modultrageinrichtung 1 anpassbar.

Verschwenkt sich die Modultrageinrichtung 1 um die erste Gelenkverbindung 4, verlängern/erhöhen oder verkürzen/verflachen sich das Windschild 2 und die Haltestruktur 3.

Dreht sich die Modultrageinrichtung 1 um die Drehverbindung 5, drehen sich das Windschild 2 und die Haltestruktur 3 gemeinsam mit der Modultrageinrichtung 1.

Das Windschild 2 umfasst mehrere Lamellen 2, die sich gegenseitig überlappen und relativ zueinander verschoben werden können, wenn die Modultrageinrichtung 1 um die erste Gelenkverbindung 4 verschwenkt wird.

Die Lamellen 2 sind zudem nach hinten ausschwenkbar, was durch die an den Lamellen 2 platzierten Doppelpfeile angedeutet ist. Zu diesem Zweck sind die einzelnen Lamellen 2 oben an der Haltestruktur 3 schwenkbar gelagert und unten auf den darunter liegenden Lamellen 2 abstützbar (z.B. mit Hilfe eines Rollenlagers). Die unterste Lamelle 2 kann unten über einen oder mehrere eigene Auflagerblöcke verfügen.

Die Ausschwenkbarkeit der Lamellen 2 nach hinten ermöglicht, dass die ggf. auftretenden nach hinten gerichteten Windsogkräfte deutlich reduziert werden und zudem ein unter der Tragvorrichtung T erzeugter Luftunterdruck aufgebaut werden kann, der für eine zusätzliche aerodynamische Stabilisierung der Tragvorrichtung T sorgt. Das geschlossene Windschild 2 hingegen kann die kippenden und abhebenden Windkräfte insbesondere bei einer rückseitigen Windanströmung erheblich reduzieren und trägt damit zu einer statischen Stabilisierung der Tragvorrichtung T unter Windlast bei.

Die Haltestruktur 3 umfasst, wie in den Figuren 2 und 3 zu sehen, zwei Teleskopträger, die statisch biegesteif und in ihrer Länge variabel sind. Die Konstruktion der Teleskopträger 3 kann z.B. aus ineinander verschachtelten Einzeltragelementen, z.B. Rund- oder Rechteckrohre mit ggf. oberseitigen Schlitzen, aufgebaut sein oder auch in Form einer sogenannten "Nürnberger Schere". Die Biegesteifigkeit der Konstruktion muss dabei so gewählt werden, dass die auf das in aufgerichteter Stellung auf das Windschild 2 einwirkenden Kräfte und die in im Wesentlichen flacher Stellung einwirkenden Schneelasten statisch sicher aufgenommen werden können.

Wie Figur 1 entnommen werden kann, können eine oder mehrere Druckfedern zwischen der Modultrageinrichtung 1 und dem Grundgerüst 9 angeordnet sein, um die Modultrageinrichtung 1 aus einer horizontalen oder flach geneigten Stellung in eine erhöhte Stellung zu drücken. Zudem kann zwischen der Modultrageinrichtung 1 und dem Grundgerüst 9 ein Zugelement, z.B. ein Seil, eine Kette, etc., angeordnet sein, das die Modultrageinrichtung 1 in eine horizontale oder flach geneigte Stellung z.B. mittels eines motorischen Antriebs ziehen kann. Auch umgekehrte Wirkmechanismen sind möglich. Das Zugelement kann unten z.B. an dem Grundgerüst 9 gemeinsam mit dem motorischen Antrieb befestigt werden.

Die Tragvorrichtung T ist außerdem mit einem gebogenen und/oder gekanteten, aerodynamisch gestalteten Firstprofil 12 ausgestattet, das um seine horizontale Längsachse schwenkbar ist, was durch den Doppelpfeil an dem Firstprofil 12 schematisch angedeutet ist. Durch das Firstprofil 12 kann ein Eindringen von Regenwasser ins Innere der Tragvorrichtung T verhindert werden. Zudem kann durch die Verschwenkbarkeit des Firstprofils 12 bei Windströmung zum einen durch Anschlagen auf der Luvseite ein Eindringen von windgetriebenen Regenwasser ins Innere der Tragvorrichtung T verhindert und zum anderen auf der Leeseite durch den aufgehenden Zwischenraum zwischen Firstprofil 12 und Energiegewinnungsmodul E bzw. Windschild 2 durch Sogeffekte die Bildung eines Luftunterdrucks unter der Tragvorrichtung T bewirkt werden. Damit kann die Stabilität der Tragvorrichtung T gegen kippende und abhebende Windkräfte deutlich erhöht werden.

Die Modultrageinrichtung 1 und das Grundgerüst 9 sind rahmenförmig aus einzelnen, aneinander befestigbaren (z.B. mittels Schraubverbindungen, Klipp- oder Rastverbindungen, etc.) Holzträgern aufgebaut. Dadurch kann die Tragvorrichtung T durch Auswahl verschieden großer Holzträger leicht an eine beliebige Größe des Energiegewinnungsmoduls E (sprich Länge und Breite davon) angepasst werden. Holz ist hinsichtlich der Nachhaltigkeit ein deutlich zu bevorzugender Werkstoff. Die verwendeten Schraubverbindungen und Scharnierverbindungen können selbstverständlich aus Metall gefertigt sein. Ferner kann sogar die Haltestruktur 3 aus Holzträgern ausgeführt sein. Die Lamellen 2 können auch aus Holz gefertigt sein, erfordern dann aber einen z.B. chemischen Holzschutz, eine Beschichtung, etc., um der Witterung standhalten zu können.

Figur 1 ist zu entnehmen, dass im Betriebszustand der Tragvorrichtung T die Modultrageinrichtung 1, die Haltestruktur 3 und das Grundgerüst 9 vollständig unter dem Energiegewinnungsmodul E, dem Windschild 2 und dem Firstprofil 12 angeordnet sind. Somit bilden das Energiegewinnungsmodul E, das Windschild 2 und das Firstprofil 12 einen konstruktiven Witterungsschutz für darunter liegende Teile der Tragvorrichtung T. Witterungsempfindliche Teile, insbesondere die aus Holz gefertigten Teile der Tragvorrichtung T, können somit z.B. vor direkter Regen- und Sonneneinwirkung, insbesondere vor aggressiver UV-Strahlung, wesentlich geschützt werden.

Die für eine Feuchtigkeitseindringung empfindlichen Stirnflächen der aus Holz gefertigten Teile können z.B. durch ein Profil-Abdeckteil, eine Metallabdeckung, eine Holz-Stoßverbindung, eine Beschichtung, etc. zusätzlich geschützt werden.

Eine dauerhafte Feuchtigkeitsansammlung unter der Tragvorrichtung T kann durch die konstruktive Ausbildung der Tragvorrichtung T insgesamt verhindert werden. So wird eine ausreichende Durchlüftung durch die mindestens einseitig seitlich offene Tragvorrichtung T, das verschwenkbare Firstprofil 12 und die ausschwenkbaren Lamellen 2 gewährleistet, wodurch eine temporäre Feuchtigkeit, die z.B. durch einen heftigen windgetriebenen Schlagregen verursacht wird, abgelüftet werden kann.

Zudem kann durch die Anordnung der Tragkonstruktion 1, 3, 9 unter dem Energiegewinnungsmodul E und dem Windschild 2 die optische, architektonische Qualität der Tragvorrichtung T gesteigert werden.

Die Modultrageinrichtung 1, die Haltestruktur 3 und das Grundgerüst 9 haben zusammen ein Gewicht von unter ungefähr 20 kg und können somit leicht transportiert und in-situ zusammengebaut werden.

Figur 1 ist ferner zu entnehmen, dass die Tragvorrichtung T zum aufstellflächennahen Halten des Energiegewinnungsmoduls E ausgeführt ist. Dadurch können zum einen einwirkende Windlasten reduziert werden. Zum anderen kann, sofern die Tragvorrichtung T z.B. auf einer begrünten oder bepflanzten Aufstellfläche AF aufgestellt wird, die aufstellflächennahe Kälte genutzt werden, um den Wirkungsgrad des Energiegewinnungsmoduls E zu erhöhen. Die Kälte entsteht insbesondere durch die in der Bepflanzung oder Begrünung enthaltenen Feuchtigkeit und der damit verbundenen Verdunstungskälte.

Die Tragvorrichtung T ist zum Tragen nur eines einziges Energiegewinnungsmoduls E ausgeführt, wodurch die Flexibilität der Tragvorrichtung T gesteigert und eine verwindungsarme Lastabtragung ermöglicht wird.

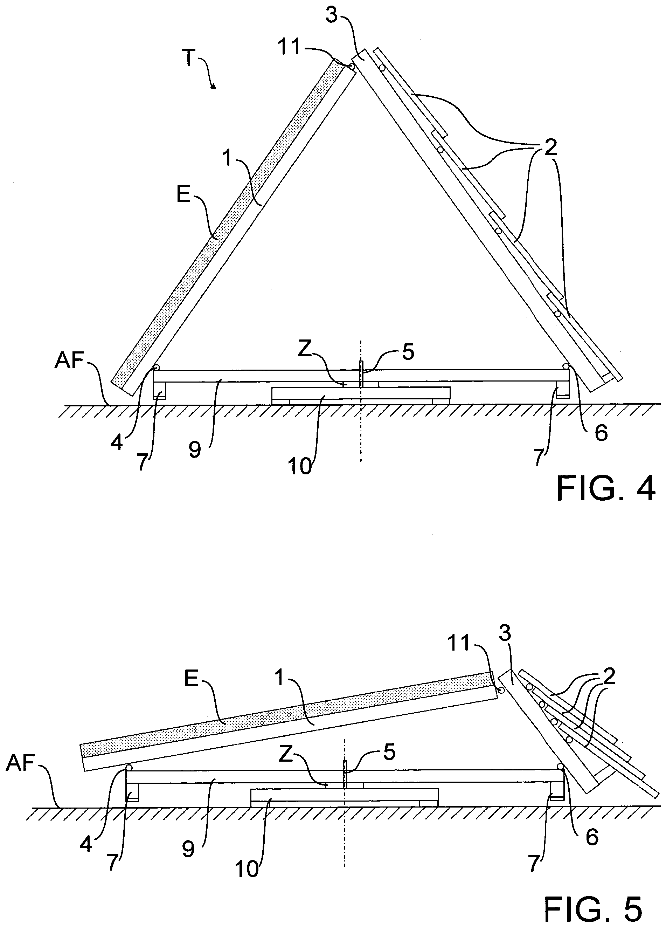

Figur 4 zeigt eine Seitenansicht der Tragvorrichtung T der Figuren 1 bis 3 in stark geneigter Stellung, während Figur 5 die Tragvorrichtung T der Figuren 1 bis 4 in gering geneigter, fast horizontaler Stellung zeigt.

Ein Vergleich der Figuren 4 und 5 verdeutlicht den Bewegungsmechanismus der Tragvorrichtung T. Insbesondere sind folgende Bewegungsmechanismen entnehmbar:
- der Dreigelenkmechanismus 4, 6, 11, mittels dem die Modultrageinrichtung 1, die Haltestruktur 3 und das Grundgerüst 9 miteinander wirkverbunden sind
- die Verschwenkbarkeit und die Höhen-/Längenvariabilität des Windschilds 2
- die Verschwenkbarkeit und die Höhen-/Längenvariabilität der Haltestruktur 3

Die in Figur 5 gezeigte nur gering geneigte Stellung ist insbesondere von Vorteil, um z.B. diffuse Sonnenstrahlung besser nutzen zu können oder starken Windkräften auszuweichen.

Die Figuren 6a und 6b zeigen eine Seitenansicht der Tragvorrichtung T der Figuren 1-5 zur Illustrierung der an unterschiedliche Lastzustände passiven Adaptivität der Tragvorrichtung T.

Die Tragvorrichtung T ist so ausbalanciert, dass die Tragkonstruktion 1, 3, 9 relativ zu dem Ständerelement 10 lastfallabhängig quasi als Ganzes gezielt nach unten absenkbar ist (z.B. verursacht durch eine Schneelast wie in Fig. 6b gezeigt) und um eine horizontale Achse A lastfallabhängig gezielt schwenk- oder kippbar ist (z.B. verursacht durch eine Windlast wie in Fig. 6a gezeigt oder eine einseitige Schneelast). Dadurch stellt die Tragvorrichtung T ein auf unterschiedliche Lastzustände reagierendes passiv-adaptives Tragwerk dar.

Die Tragvorrichtung T ist zudem mit einer z.B. vier Stützfüße 7 umfassenden Stützeinrichtung 7 ausgestattet. Die vier Stützfüße 7 sind im Normalfall z.B. um ungefähr 10mm bis 30mmm von der Aufstellfläche AF beabstandet, um eine freie Drehung der Tragkonstruktion 1, 3, 9 um die Drehverbindung 5 zu ermöglichen und zum anderen aufstellflächennah verlegte Kabel, etc. aus oder in die Tragvorrichtung T führen zu können.

Die vier Stützfüße 7 sind zudem in Abhängigkeit unterschiedlicher Lastzustände mittels einer Schwenk- oder Kippbewegung (Fig. 6a) und einer vertikalen Absenkung (Fig. 6b) der Tragkonstruktion 1, 3, 9 temporär auf der Aufstellfläche AF aufsetzbar. Damit können die Stützfüße 7 an der windabgewandten Seite der Tragvorrichtung T auf die Aufstellfläche AF aufsetzen, wodurch eine zusätzliche Auflagerung ermöglicht und ein vergrößerter innerer Hebelarm zur Lastabtragung erzielt wird. Zudem steigt die Widerstandskraft der Tragvorrichtung T gegenüber horizontalen und kippgefährdenden Windkräften beträchtlich. Durch die passive Adaptivität kann insbesondere die Tragkonstruktion 1, 3, 9 materialschonender dimensioniert werden. Durch die windlastverursachte Schwenk- oder Kippbewegung setzen nicht alle Stützfüße 7 auf der Aufstellfläche AF auf, sondern nur die auf der windabgewandten Seite. Durch die schneelastverursachte Absenkbewegung setzen vorzugsweise alle Stützfüße 7 auf der Aufstellfläche AF auf.

Die passive Adaptivität kann durch das elastische Zwischenlager Z zwischen dem Grundgerüst 9 und dem Ständerelement 10 und/oder einer gezielten elastischen Nachgiebigkeit z.B. des Grundgerüsts 9 ermöglicht werden. Sogar spezielle Schwenklager sind möglich.

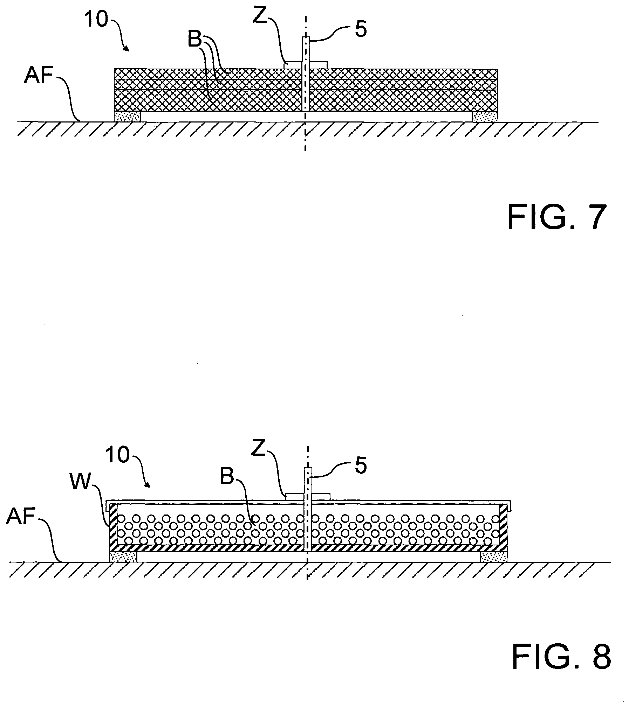

Figur 7 zeigt eine Seitenansicht eines Ständerelements 10 gemäß einer Ausführungsform der Erfindung. Bei der in Figur 7 gezeigten Ausführungsform umfasst das Ständerelement 10 mehrere übereinander gestapelte Ballastblöcke B, vorzugsweise Betonblöcke.

Figur 8 zeigt eine Seitenansicht eines Ständerelements 10 gemäß einer anderen Ausführungsform der Erfindung. Das in Figur 8 gezeigte Ständerelement 10 umfasst eine Tragwanne W, die mit Ballast B, etwa Kies, Sand, Betonsteinen, etc., ausgefüllt ist.

## Patentansprüche

1. Tragvorrichtung (T) für ein Energiegewinnungsmodul (E) und vorzugsweise zur rückverankerungsfreien Nutzung auf einer Aufstellfläche (AF), mit:
- einer Tragkonstruktion (1, 3, 9), die eine dem Sonnenstand zweiachsig nachführbare Modultrageinrichtung (1) zum Halten des Energiegewinnungsmoduls (E) umfasst,
- wobei die Tragvorrichtung (T) eine Stützeinrichtung (7) aufweist, die mittels einer lastfallabhängigen Absenkbewegung der ganzheitlichen Tragkonstruktion (1, 3, 9) und/oder einer lastfallabhängigen Schwenk- oder Kippbewegung der Tragkonstruktion (1, 3, 9) temporär auf einer Aufstellfläche (AF) aufsetzbar ist und die Tragvorrichtung (T) somit ein auf unterschiedliche Lastzustände reagierendes passiv-adaptives Tragwerk darstellt, **dadurch gekennzeichnet, dass** die Tragvorrichtung (T) ein längen- und/oder höhenvariables Windschild (2) aufweist, und dass die Tragkonstruktion (1, 3, 9) einen Dreigelenk-Mechanismus (4, 6, 11) bildet.

2. Tragvorrichtung (T) nach Anspruch 1, **dadurch gekennzeichnet, dass** das Windschild (2) mehrere Lamellen (2) aufweist.

3. Tragvorrichtung (T) nach Anspruch 2, **dadurch gekennzeichnet, dass** die Lamellen (2) sich gegenseitig überlappen und/oder relativ zueinander verschiebbar ausgeführt sind.

4. Tragvorrichtung (T) nach Anspruch 2 oder 3, **dadurch gekennzeichnet, dass** die Lamellen (2) ausschwenkbar gelagert sind.

5. Tragvorrichtung (T) nach einem der vorhergehenden Ansprüche, **dadurch gekennzeichnet, dass** die Tragkonstruktion (1, 3, 9) eine längenvariable und/oder höhenvariable Haltestruktur (3) zum Halten des Windschilds (2) umfasst.

6. Tragvorrichtung (T) nach Anspruch 5, **dadurch gekennzeichnet, dass** die Haltestruktur (3) teleskopförmig oder scherenförmig längenvariabel ist.

7. Tragvorrichtung (T) nach einem der vorhergehenden Ansprüche, **dadurch gekennzeichnet, dass**
- das Windschild (2) gemeinsam mit der Modultrageinrichtung (1) um eine Drehverbindung (5) drehbar ist, und/oder
- das Windschild (2) zusammen mit der Haltestruktur (3) um die Gelenkverbindung (6) schwenkbar ist.

8. Tragvorrichtung (T) nach einem der vorhergehenden Ansprüche, **dadurch gekennzeichnet, dass** die Tragkonstruktion (1, 3, 9) ein Grundgerüst (9) umfasst, das zum Tragen der Modultrageinrichtung (1) und/oder der Haltestruktur (3) dient.

9. Tragvorrichtung (T) nach einem der vorhergehenden Ansprüche, **dadurch gekennzeichnet, dass** die Tragvorrichtung (T) ein Ständerelement (10) umfasst, das zum Aufstellen auf einer Aufstellfläche (AF) und als Sockel für die Tragkonstruktion (1, 3, 9) dient.

10. Tragvorrichtung (T) nach Anspruch 9, **dadurch gekennzeichnet, dass** die Tragvorrichtung (T) so ausgeführt ist, dass die Tragkonstruktion (1, 3, 9) relativ zu dem Ständerelement (10) lastfallabhängig ganzheitlich absenkbar ist und/oder um eine Achse (A) lastfallabhängig schwenk- oder kippbar ist und die Tragvorrichtung (T) somit ein auf unterschiedliche Lastzustände reagierendes passiv-adaptives Tragwerk darstellt.

11. Tragvorrichtung (T) nach einem der vorhergehenden Ansprüche, **dadurch gekennzeichnet, dass** die Tragvorrichtung (T) ein vorzugsweise schwenkbares Firstprofil (12) als Witterungsschutz umfasst.

12. Tragvorrichtung (T) nach einem der vorhergehenden Ansprüche, **dadurch gekennzeichnet, dass** die Tragkonstruktion (1, 3, 9) und das Windschild (2) so ausgebildet sind, dass das Energiegewinnungsmodul (E) und das Windschild (2) die Tragkonstruktion (1, 3, 9) zumindest nahezu vollständig überdecken, vorzugsweise mit Ausnahme des Firstbereichs der Tragvorrichtung (T), der durch das Firstprofil (12) überdeckbar ist.

13. Tragvorrichtung (T) nach einem der vorhergehenden Ansprüche, **dadurch gekennzeichnet, dass**
- die Modultrageinrichtung (1), die Haltestruktur (3) und/oder das Grundgerüst (9) Holzträger umfasst, und/oder
- das Windschild (2) Holzlamellen umfasst.

14. Tragvorrichtung (T) nach einem der vorhergehenden Ansprüche, **dadurch gekennzeichnet, dass** die Tragvorrichtung (T) zum Halten eines einzigen Energiegewinnungsmoduls (E) ausgeführt ist.

15. Anordnung mit zumindest einer Tragvorrichtung (T) nach einem der vorhergehenden Ansprüche, wobei die Tragvorrichtung (T) ein einziges Energiegewinnungsmodul (E) trägt und das Energiegewinnungsmodul (E) und das Windschild (2) die Tragkonstruktion (1, 3, 9) vollständig überdecken, mit Ausnahme des Firstbereichs der Tragvorrichtung (T), der vorzugsweise durch das Firstprofil (12) überdeckt wird.

## Claims

1. Support device (T) for an energy generation module (E) and preferably for unanchored use on an installation surface (AF), having:
- a support structure (1, 3, 9), which comprises a module support fixture (1) to hold the energy generation module (E), said module support fixture (1) tracking the position of the sun in two axes,
- wherein the support device (T) comprises a prop (7) that can be temporarily placed on an installation surface (AF) by means of a load-case-dependent lowering motion of the entire support structure (1, 3, 9) and/or a load-case-dependent swivelling or tilting motion of the support structure (1, 3, 9), the support device (T) thereby constituting a passive-adaptive supporting framework that responds to different load conditions, **characterized in that** the support device (T) comprises a variable-length and/or variable-height windshield (2), and **in that** the support structure (1, 3, 9) forms a three-hinge mechanism (4, 6, 11).

2. Support device (T) according to claim 1, **characterized in that** the windshield (2) comprises a plurality of slats (2).

3. Support device (T) according to claim 2, **characterized in that** the slats (2) overlap each other and/or are arranged to slide relative to each other.

4. Support device (T) according to claim 2 or 3, **characterized in that** the slats (2) are swivel-mounted.

5. Support device (T) according to any of the preceding claims, **characterized in that** the support structure (1, 3, 9) comprises a variable-length and/or variable-height mounting structure (3) to hold the windshield (2).

6. Support device (T) according to claim 5, **characterized in that** the length of the mounting structure (3) is variable due to a telescopic or scissor-like configuration.

7. Support device (T) according to any of the preceding claims, **characterized in that**
- the windshield (2), together with the module support fixture (1), is rotatable around a slewing ring (5), and/or
- the windshield (2), together with the mounting structure (3), is rotatable around the articulated connection (6).

8. Support device (T) according to any of the preceding claims, **characterized in that** the support structure (1, 3, 9) comprises a base frame (9) that serves to carry the module support fixture (1) and/or the mounting structure (3).

9. Support device (T) according to any of the preceding claims, **characterized in that** the support device (T) comprises a pedestal element (10) that serves for positioning on an installation surface (AF) and as a base for the support structure (1, 3, 9).

10. Support device (T) according to claim 9, **characterized in that** the support device (T) is designed so that the entire support structure (1, 3, 9) can to be lowered as a function of load case relative to the pedestal element (10) and/or can be swivelled or tilted around an axis (A) as a function of load case, the support device (T) therefore constituting a passive-adaptive supporting framework that is responsive to different load conditions.

11. Support device (T) according to any of the preceding claims, **characterized in that** the support device (T) comprises a preferably swivel-mounted ridge profile (12) as weather protection.

12. Support device (T) according to any of the preceding claims, **characterized in that** the support structure (1, 3, 9) and the windshield (2) are configured so that the energy generation module (E) and the windshield (2) at least almost completely cover the support structure (1, 3, 9), preferably with the exception of the ridge area of the support device (T), which is able to be covered by the ridge profile (12).

13. Support device (T) according to any of the preceding claims, **characterized in that**
- the module support fixture (1) the mounting structure (3) and/or the base frame (9) comprise wooden beams, and/or
- the windshield (2) comprises hollow slats.

14. Support device (T) according to any of the preceding claims, **characterized in that** the support device (T) is designed to hold a single energy generation module (E).

15. Arrangement with at least one support device (T) according to any of the preceding claims, wherein the support device (T) carries a single energy generation module (E) and the energy generation module (E) and the windshield (2) completely cover the supporting structure (1, 3, 9) with the exception of the ridge area of the support device (T), which is preferably covered by the ridge profile (12).

## Revendications

1. Support (T) pour un module de collecte d'énergie (E) et de préférence pour l'utilisation exempte d'ancrages de retenue sur une surface de pose (AF), avec :
- une construction porteuse (1, 3, 9) qui comprend un dispositif porteur de module (1) capable de suivre le soleil biaxialement pour le maintien du module de collecte d'énergie (E),
- dans lequel le support (T) présente un dispositif d'appui (7) qui peut être placé, au moyen d'un mouvement d'abaissement dépendant du cas de charge de la construction porteuse (1, 3, 9) entière et/ou d'un mouvement pivotant ou basculant dépendant du cas de charge de la construction porteuse (1, 3, 9), temporairement sur une surface de pose (AF) et le support (T) constitue ainsi une structure porteuse adaptative de manière passive réagissant à différents états de charge, **caractérisé en ce que** le support présente un pare-vent (2) variable en longueur et en hauteur, et que la construction porteuse forme un mécanisme à trois articulations (4, 6, 11).

2. Support (T) selon la revendication 1, **caractérisé en ce que** le pare-vent (2) présente plusieurs lamelles (2).

3. Support (T) selon la revendication 2, **caractérisé en ce que** les lamelles (2) se recouvrent mutuellement et/ou sont réalisées de manière mobile les unes par rapport aux autres.

4. Support (T) selon la revendication 2 ou 3, **caractérisé en ce que** les lamelles (2) sont logées de manière à pouvoir être écartées par pivotement.

5. Support (T) selon l'une quelconque des revendications précédentes, **caractérisé en ce que** la construction porteuse (1, 3, 9) comprend une structure de retenue (3) variable en longueur et/ou variable en hauteur pour le maintien du pare-vent (2).

6. Support (T) selon la revendication 5, **caractérisé en ce que** la structure de retenue (3) est variable en longueur de manière télescopique ou en ciseaux.

7. Support (T) selon l'une quelconque des revendications précédentes, **caractérisé en ce que**
- le pare-vent (2) peut tourner conjointement avec le dispositif porteur de module (1) autour d'une liaison rotative (5), et/ou
- le pare-vent (2) peut pivoter conjointement avec la structure de retenue (3) autour de la liaison articulée (6).

8. Support (T) selon l'une quelconque des revendications précédentes, **caractérisé en ce que** la construction porteuse (1, 3, 9) comprend une structure de base (9) qui sert de support du dispositif porteur de module (1) et/ou de la structure de retenue (3).

9. Support (T) selon l'une quelconque des revendications précédentes, **caractérisé en ce que** le support (T) comprend un élément de montant (10) qui sert au placement sur une surface de pose (AF) et de socle pour la construction porteuse (1, 3, 9).

10. Support (T) selon la revendication 9, **caractérisé en ce que** le support (T) est réalisé de sorte que la construction porteuse (1, 3, 9) puisse être abaissée entièrement selon le cas de charge par rapport à l'élément de montant (10) et/ou puisse pivoter ou basculer selon le cas de charge autour d'un axe (A) et le support (T) constitue ainsi une structure porteuse adaptative de manière passive réagissant à différents états de charge.

11. Support (T) selon l'une quelconque des revendications précédentes, **caractérisé en ce que** le support (T) comprend un premier profil (12) pivotant de préférence en tant que protection contre les intempéries.

12. Support (T) selon l'une quelconque des revendications précédentes, **caractérisé en ce que** la construction porteuse (1, 3, 9) et le pare-vent (2) sont réalisés de sorte que le module de collecte d'énergie (E) et le pare-vent (2) recouvrent au moins presque complètement la construction porteuse (1, 3, 9), de préférence à l'exception de la première zone du support (T) qui peut être recouverte par le premier profil (12).

13. Support (T) selon l'une quelconque des revendications précédentes, **caractérisé en ce que**
- le dispositif porteur de module (1), la structure de retenue (3) et/ou la structure de base (9) comprend des supports en bois, et/ou
- le pare-vent (2) comprend des lamelles de bois.

14. Support (T) selon l'une quelconque des revendications précédentes, **caractérisé en ce que** le support (T) est réalisé pour le maintien d'un seul module de collecte d'énergie (E).

15. Agencement avec au moins un support (T) selon l'une quelconque des revendications précédentes, dans lequel le support (T) porte un seul module de collecte d'énergie (E) et le module de collecte d'énergie (E) et le pare-vent (2) recouvrent complètement la construction porteuse (1, 3, 9) à l'exception de la première zone du support (T) qui est recouverte de préférence par le premier profil (12).
